# EUROPEAN PATENT SPECIFICATION

(11) **EP 3 168 445 B1**
(45) Date of publication and mention of the grant of the patent: **22.05.2019**
(21) Application number: 16198579.1
(22) Date of filing: 14.11.2016
(51) Int. Cl.: F02D 19/06, F02D 19/08

(54) **DUAL FUEL SYSTEM FOR POWERING COMBUSTION ENGINES**
DOPPELBRENNSTOFFSYSTEM ZUM ANTREIBEN EINES VERBRENNUNGSMOTORS
SYSTÈME À DEUX CARBURANTS SERVANT À ALIMENTER DES MOTEURS À COMBUSTION INTERNE

(30) Priority: 16.11.2015 PL 41480015; 10.11.2016 PL 41942016
(43) Date of publication of application: 17.05.2017
(73) Proprietor: Lapinski, Krzysztof, 18-100 Lapy (PL)
(72) Inventor: Lapinski, Krzysztof, 18-100 Lapy (PL)
(74) Representative: Kalita, Lucjan

(56) References cited:
- WO-A1-2009/098728
- WO-A1-2011/130791
- WO-A1-2016/024298
- WO-A2-2014/039663
- DE-A1-102013 019 731
- NL-C2- 2 001 772

## Description

Dual fuel system for powering combustion engines.

The present invention relates to a dual fuel system for engines with direct fuel injection.

Operating the engines with direct injection fueled by gas in a liquid physical state requires that the fuel was at low temperature. To prevent transforming of gas from the liquid to gaseous state there are used additional gas cooling systems including the ones containing coolers.

From published patent PL/EP 2143916 it is known dual fuel injection system and a motor vehicle with such system which includes a liquid fuel pump for example for pumping gasoline and a second pump for pumping gas fuel in liquefied state. In this arrangement, to the line between the gas tank and the second pump there is connected the outlet of the first pump of the liquid fuel, and the second pump is connected via a high pressure pump with the injector assembly. The system is equipped with valves, one of which valves is installed in the bypass circuit of the second fuel pump and additional are installed at the inlet and outlet of the high pressure pump. In addition, the system comprises a return line for returning excess gas fuel to the gas tank. Operation of the system, especially the pumps is controlled by the control unit, where said control unit maintains the required fuel pressure and transmits (returns) the excess of the fuel from injectors manifold and flushes the high pressure pump.

From DE 102008063278 there is known another system which has device dispensing two types of fuel to the combustion engine, where said device which comprises a pump for primary fuel as diesel and a second pump for gas, the pumps supply the fuel to the mixing tank. The output of the mixing tank is connected with high-pressure pump, which feeds an injector assembly. In the mixing tank there is a buffer space, containing vaporized fuel mixture not used by the injection. The buffer tank is connected to the mixing assembly injectors. In addition, this system has a return branch, which connects the output of the high pressure pump to the mixing tank.

It is also known from the patent description DE 102004011414 system that comprises a tank of liquid fuel at low pressure and a gas tank. The tanks are equipped with pumps, which through the lines and filters supply the fuel to a mixing valve. The mixing valve is connected to the high-pressure pump, which supplies fuel mixture to the manifold injector. The collector has return line, which is connected via a condenser to the system powering the high-pressure pump.

NL 2001772 and DE102013019731 disclose other examples of a known dual fuel injection system.

The aim of the invention is to improve the supply system both in terms of supply of fuel or fuel blend for an internal combustion engine and the discharge of excess fuel delivered. The aim is also an improving the injection of fuel into internal combustion engine members, which have low or high pressure. Most importantly, problem to solve is to control the flow of mixed fuel returning from a twin chamber high pressure pump. This objective realizes dual fuel system to power internal combustion engines according to the invention presented below in two alternatives of the invention. The first alternative of the invention is understood to be when both fuel thanks are connected to the inlet of the mixed fuel pump and moreover a return line is connected between the mixed fuel tank and the refueling of the alternative fuel tank. This first alternative of the invention comprising a tank of the primary fuel in form of gasoline or diesel with a primary fuel pump an alternative fuel circulation pump, the twin chamber high pressure pump, an injector rail, a return circuit for returning excess fuel from the high pressure pump and valves, and solenoid valves, and a controller for controlling the operation of the system, wherein the mixed fuel tank is equipped with a mixed fuel pump and a mixed fuel level sensor, which is connected to the controller. The inlet of the twin chamber high pressure pump is connected to the mixed fuel pump with a line and its high pressure output is connected to the injector rail. The inlet of an alternative fuel circulation pump located at the inlet of the mixed fuel tank or in the mixed fuel tank, is connected through a first line having a solenoid valve and a check valve to the outlet of the primary fuel tank in the form of gasoline or diesel, and through a second line having a solenoid valve and a check valve to the outlet of an alternative fuel tank in the form of gas, wherein a line of the return circuit connects the inlet of the mixed fuel tank with the refueling line of the alternative fuel tank in the form of gas, characterized in that, the return circuit extending from the second output of the twin chamber high pressure pump comprises a return line with a turned on pressure sensor and a temperature sensor which connects through a return line having a solenoid and a check valve, to the inlet to the mixed fuel tank and connects through another return line, having a solenoid and a check valve, to the inlet to the refueling line of the alternative fuel tank in the form of gas.

Alternative output of the twin chamber high pressure pump is connected by the second branch of the bypass through the solenoid valve with the second output of the twin chamber high pressure pump. The connection between the output of the twin chamber high pressure pump and the inlet of the output of the twin chamber high pressure pump creates an additional branch of the bypass together with the solenoid valve and is called a branch of the bypass.

Preferably, the return circuit line between the connection with alternative fuel tank in the form of gas filling line and inlet to the mixed fuel tank has installed check valve and solenoid valve.

In the case where in the alternative fuel tank in the form of gas there is installed multivalve, i.e. a valve with multiple channels that open and close independently of one another, then the output of the multivalve is connected through the check valve with the inlet of the circulating pump inlet as well as output of the multivalve is connected to the refueling check valve of an alternative fuel in the form of gas.

The circulation pump, the primary fuel pump, the mixed fuel pump, the alternative fuel in the form of gas level sensor, the temperature sensor, the pressure sensor and all the solenoid valves and the solenoid of the multivalve are connected to the controller.

Modified, with respect to that described above, the second alternative is understood to be when the primary fuel tank is connected to the outlet of the mixed fuel tank; only the alternative fuel tank is connected to the mixed fuel tank and moreover, there is no return line, contrary to the first alternative. This another alternative of the invention of dual fuel supply system for internal combustion engines comprising: a primary fuel tank in the form of gasoline or diesel fuel, with the primary fuel pump, an alternative fuel tank in a form of gas, the mixed fuel tank, the alternative fuel circulation pump, the twin chamber high pressure pump, the injector rail, the return circuit for returning excess fuel from the high pressure pump and valves, and solenoid valves, and a controller for controlling the operation of the system, wherein the mixed fuel tank is equipped with the mixed fuel pump and the mixed fuel level sensor, which is connected to the controller. The inlet of the twin chamber high pressure pump is connected to the mixed fuel pump with the line and its high pressure output is connected to the injector rail. The inlet of an alternative fuel circulation pump located at the inlet of the mixed fuel tank or in the mixed fuel tank, is connected through the line having the solenoid valve and the check valve to the out of an alternative fuel tank in the form of gas, wherein the outlet of the primary fuel tank containing the line with the check valve is connected through the line with the line constituting the outlet of the mixed fuel tank containing the line with the check valve and a solenoid, characterized in that, the return circuit extending from the second output of the twin chamber high pressure pump comprises a return line with a turned on pressure sensor and the temperature sensor which connects through the return line having the solenoid and the check valve, to the inlet to the mixed fuel tank and connects through another return line having the solenoid and the check valve, to the inlet to the refueling line of the alternative fuel tank in the form of gas.

The modified arrangement is characterized in that the outlet of the primary fuel tank comprising a line with a check valve, is connected to an additional line with a line forming the outlet of the mixed fuel tank including a line with a check valve and a solenoid valve.

On the additional line there is pump and check valve. Installed here pump feeds the fuel through the check valve to the members supplying internal combustion engine, as well when the primary fuel pump conveying fuel from the primary fuel tank has insufficient capacity.

Preferably, the system further comprises a low pressure injection rail, where use of which improves the characteristic of the combustion engine powered by fuel in the illustrated system. This rail can be placed in the system in two different positions. In the first position the rail is connected by line in series with the inlet of the twin chamber high pressure pump. In the second position the injection rail is connected by the line in series with the output of the high pressure pump.

System according to the invention allows controlling the flow of mixed fuel returning from the twin chamber high pressure pump. Additionally provides correct fueling of the internal combustion engine with primary fuel and/or alternative fuel and does not require additional cooling devices to cool alternative fuel in the form of liquefied gas and also do not require the use of special gas tank and specific multivalve. The use of additional injection rail in the modified system improves the parameters of the internal combustion engine.

The invention is illustrated in the drawings in the embodiments of the system, wherein:

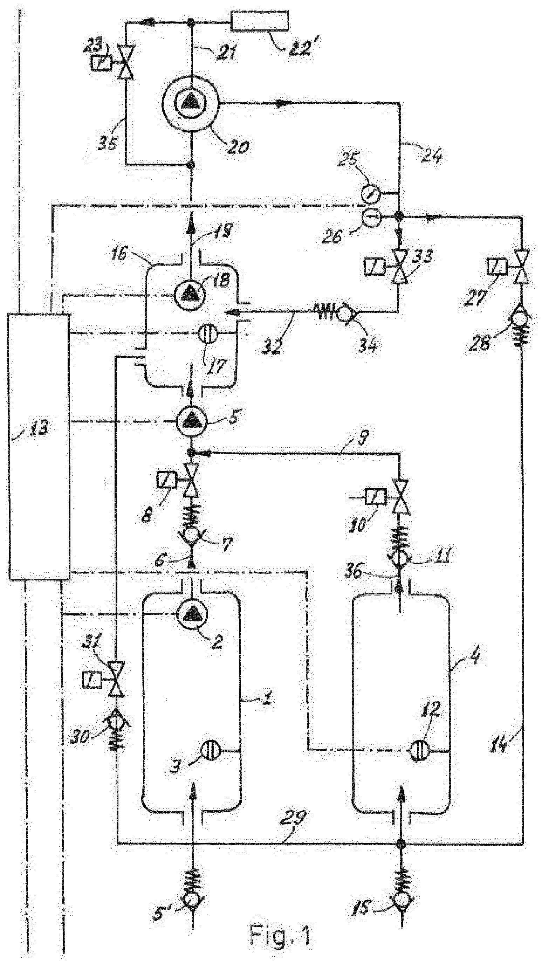

Fig. 1 - shows a schematic of a first embodiment of the dual fuel powered engine,

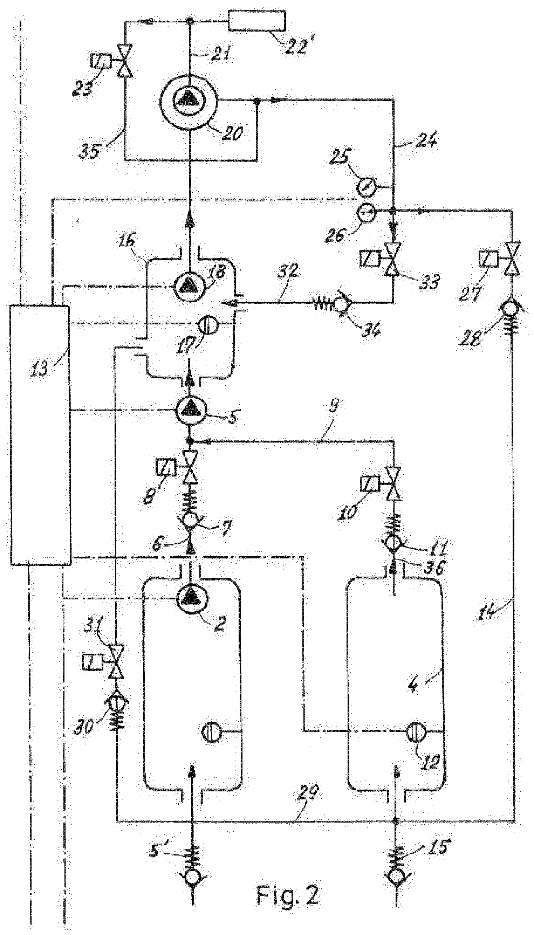

Fig. 2 - shows a schematic of a variant with the second branch of the bypass,
Fig. 3 - schematic of the circulating pump placed within of the mixed fuel tank,
Fig. 4 - schematic illustration of another embodiment of the system, in which the alternative fuel tank in the form of the gas is equipped with the multivalve,
Fig. 5 - a schematic diagram of the modified first embodiment of the dual fuel powered engine,
Fig. 6 - shows a second embodiment of the modified system,
Fig. 7 - the third embodiment of the modified system,
Fig. 8 - schematic diagram showing the alternative fuel tank.

Example 1. According to the first embodiment the system comprises a primary fuel tank 1, for example in the form of a gasoline, equipped with a primary fuel pump 2 and a primary fuel level sensor 3 and an alternative fuel tank in a form of gas 4. On the inlet of the primary fuel tank 1 there is mounted check valve 5 '. The primary fuel pump 2 is connected to the inlet of a circulation pump 5, wherein on a line 6 there is mounted a check valve 7 and a solenoid valve 8 and said line is also connected with line 9 through a solenoid valve 10 and a check valve 11 to the output of an alternative tank in the form of gas 4. In the tank 4 there is an alternative fuel level sensor 12 connected to a controller 13, which is also connected to a circulation pump 5 of the alternative fuel. The inlet of the alternative fuel tank in the form of gas 4 is connected with a line 14 of the return circuit and it is equipped with a check valve 15. In a mixed fuel tank 16 there is arranged a level sensor 17 and a mixed fuel mixture fuel pump 18 whose output is connected through a line 19 to a twin chamber high pressure pump 20. The mixed fuel level sensor 17 and the mixed fuel pump 18 are connected to the controller 13. The output of the twin chamber high pressure pump 20. is connected via line 21 with an injector rail 22 '. Between an inlet of the twin chamber high pressure pump 20 and the output of the twin chamber high pressure of said pump there is enabled bypass branch 35 with a solenoid valve 23 connected to the controller 13. The second output of twin chamber high pressure pump 20 through a line 24, on which there are connected a pressure sensor 25 and a temperature sensor 26 is connected through the line 14 of a solenoid 27 and a check valve 28 to the inlet of the alternative tank in the form of gas 4 connected through line 29 through a check valve 30 and a solenoid valve 31 to the second inlet of the mixed fuel tank 16. Moreover, the second output of twin chamber high pressure pump 20 through the line 24 with the pressure sensor 25 and the temperature sensor 26 and a line 32 with a solenoid valve 33 and a check valve 34 is connected to the third inlet of the mixed fuel tank 16. The above-mentioned solenoid 27, the solenoid 31 and the solenoid 33 and the pressure sensor 25 and pressure sensor 26 are connected to the controller 13.

Example 2. According to a second embodiment of the dual fuel system the solenoid valve 23 is on the other branch of the bypass 35, connecting the twin chamber high pressure pump output of the twin chamber high pressure pump 20 to the second output of said pump 20. Variant connection of the solenoid valve 23 constitutes the bypass branch, when the solenoid valve 23 is connected to the high pressure inlet of the twin chamber high pressure pump 20 - as in Example 1 - and the second bypass branch, when the solenoid 23 is connected to the high pressure second output of the twin chamber high pressure pump 20. The second the variant may comprise the first or the second branch of the bypass 35.

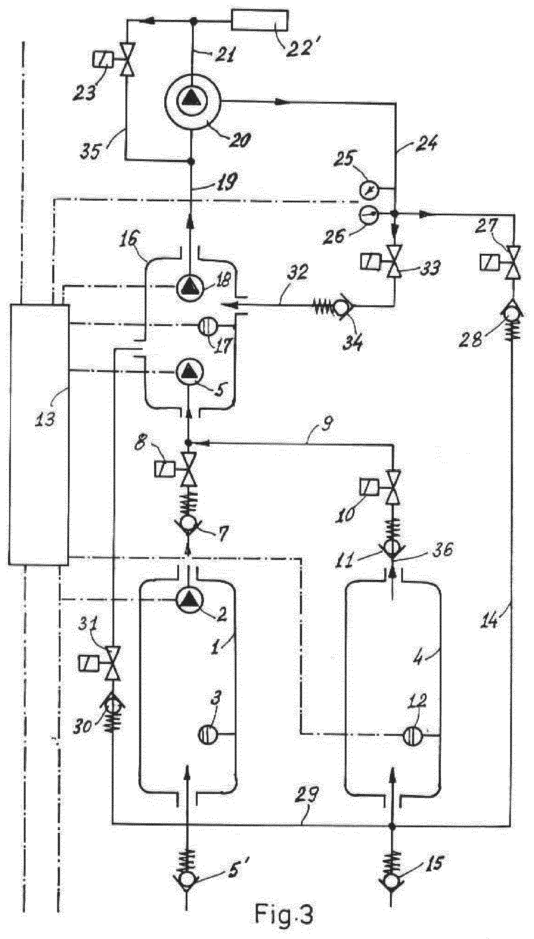

Example 3. Another embodiment of the dual fuel system shown in Fig. 3 provides that the circulation pump 5 is disposed in the mixed fuel tank 16. The output from the alternative fuel tank of the form of gas 4 is connected to a second line 36 through the check valve 11, the solenoid 10 and the line 9 with the line 6 connecting the output of the primary fuel tank 1 with inlet to the circulation pump 5, wherein the connection between lines 6 and 9 is between the solenoid 8 and the inlet of the circulating pump 5. On the line 6 in front of the solenoid there is the check valve 7. The other connections and components are the same as in the first embodiment.

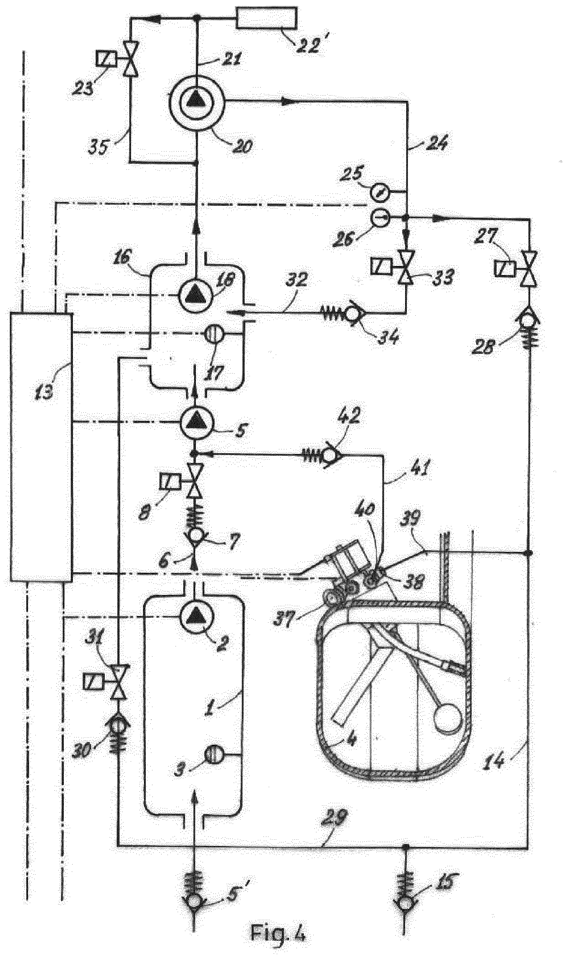

Example 4. The next option shown in Fig. 4 comprises a dual fuel supply system for internal combustion engines, wherein the alternative fuel tank in the form of gas 4 comprises a multivalve 37. An inlet 38 of gas refueling multivalve 37 is connected by line 39 and the line 14 with the return valve 15 designed for refueling, while the output 40 of the multivalve 37 is connected to a line 41 through a check valve 42 with inlet of the circulating pump 5.

The primary fuel in the form e.g. gasoline from the primary fuel tank 1, through the primary fuel pump 2, the line 6, the check valve 7 and the solenoid 8 and the circulation pump 5, fills the mixed fuel tank 16 to the level specified by the mixed fuel level sensor 17 which is connected the controller 13. Fuel or fuel mixture is fed through the mixed fuel pump 18 to the twin chamber high pressure pump 20, which is injected into the injector rail 22 '. The surplus of the fuel from the twin chamber high pressure pump 20 is returned to the mixed fuel tank 16 by line 24 through the solenoid valve 33 and a check valve 34 wherein the solenoid valve 33 is controlled by a controller 13.

An alternative fuel in the form of a gas in the liquid phase under pressure in the alternative fuel tank 4 is fed to the circulation pump 5 after opening of the solenoid valve 10 turned on by the controller 13. At the same time the gas pressure closes the check valve 7 cutting off the primary fuel, for example in the form of gasoline. The circulation pump 5 fills the mixed fuel tank 16 to the level determined by the mixed fuel sensor 17 and the controller 13. Then, the fuel mixture is fed through the mixed fuel pump 18 to the twin chamber high pressure pump 20, and the excess fuel mixture is returned to the mixed fuel tank 16 through the line 24, the solenoid valve 33 and the check valve 34. The pressure and temperature of the fuel mixture supplied to the mixed fuel tank 16 are measured by the pressure sensor 25 and temperature sensor 26 and based on this data the controller 13 determines the state of aggregation of the fuel mixture. After determining that in the mixed fuel tank 16 is only gas fuel solenoid said controller closes solenoid valve 35 and opens the solenoid valve 27. Then the excess fuel returns through check valve 28, the line 14 into the alternative fuel tank 4 the and/or through the line 29 through the check valve 30 and the solenoid valve 31 to the mixed fuel tank 16. When the engine is switched off when operating on gas fuel, the controller 13 opens the solenoid 23 to lower the pressure at the injector rail 22 ' to prevent excessive pressure above the nominal value of the heating up of the twin chamber high pressure pump 20.

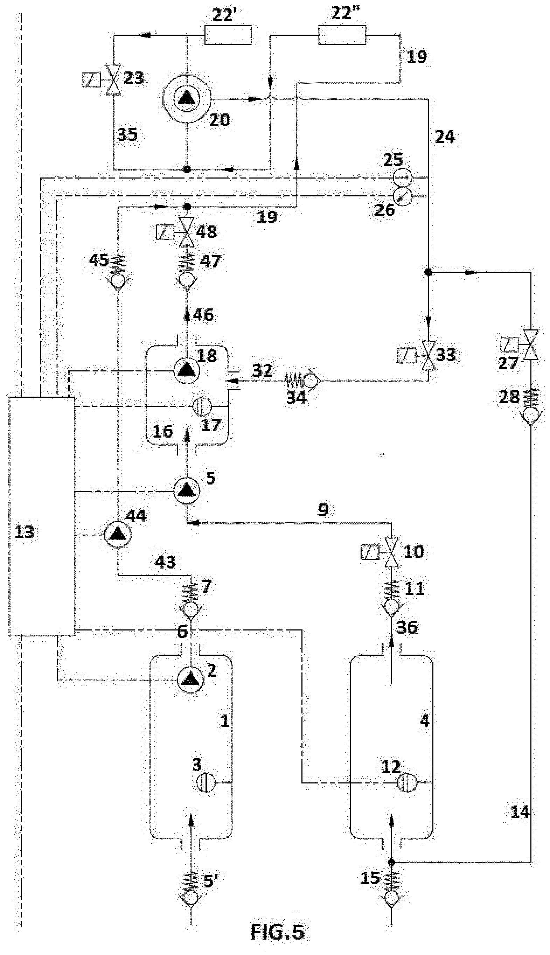

Example 5. According to the first embodiment shown in Figure 5, the system includes the primary fuel tank 1, for example in the form of gasoline equipped with the primary fuel pump 2 and the primary fuel level sensor 3 and the alternative fuel tank in the form of a gas 4. At the inlet of the primary fuel 1 there is mounted check valve 5'. The primary fuel pump 2 is connected through the line 6, on which there is mounted the check valve 7 with an additional line 43, on which there is installed a pump 44 and further a check valve 45. Further the line 43 is connected to the line 19 which forms the outlet of the mixed fuel tank 16 including a line 46, a check valve 47 and a solenoid 48. The alternative fuel tank in the form of gas 4 at the inlet has the check valve 15, inside has the alternative fuel level sensor 12 and the output the second line 36, together with the check valve 11 and the solenoid 10. The line 9 connects to the solenoid 10, and said line constitutes the inlet to the circulation pump 5, which is installed at the inlet to the mixed fuel tank 16.

In the mixed fuel tank 16 there is placed the mixed fuel level sensor 17 and the mixed fuel pump 18. On the line 19 connected to the line 43 there is installed a low pressure the injection rail 22", which is connected in series with the inlet of the high pressure pump 20. The output and the inlet of twin chamber high pressure pump 20 is connected by the second branch of the bypass 35, in which branch there is plugged in solenoid 23 as well as output of that twin chamber high pressure pump 20 is connected by the line 21 with an injector 20 '. The second output of twin chamber high pressure pump 20 through line 24, on which line there is connected the pressure sensor 25 and the temperature sensor 26 is connected through line 14 of the return circuit line to the inlet of the alternative fuel tank in the form of gas 4. On the return circuit line 14 there is plugged in the solenoid 27 and subsequently the check valve 28.

Moreover, the second output of the twin chamber high pressure pump 20 through line 24 with the pressure sensor 25 and the temperature sensor 26 and the line 32, in which there is plugged in the solenoid valve 33 and further the check valve 34 is connected to a second inlet of the mixed fuel tank 16. The system comprises the controller 13 to which there are connected: the primary fuel pump 2, the circulating pump 5, the mixed fuel level sensor 17, the mixed fuel pump 18, the solenoid valve 23, the pressure sensor 25, the temperature sensor 26, the solenoid valve 33.

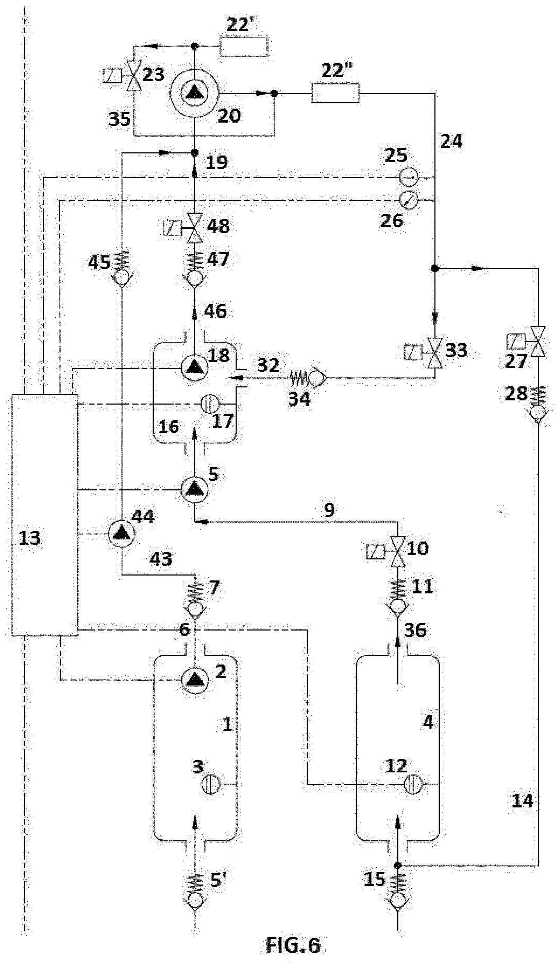

Example 6. According to the second embodiment shown in Fig. 6, the additional line 43 connected to the line 19 - connected through the check valve 47 a solenoid valve 48 to the outlet 46 of the mixed fuel tank 16 - is connected to the inlet of the twin chamber high pressure pump 20. The solenoid 23 is on the bypass of the second branch 35 which connects the output of the bypass twin chamber high pressure pump 20 to the second output of said pump 20 , where the additional low pressure injector rail 22" is connected in series with the twin chamber high pressure pump 20 on the line 24. The outlet of the primary fuel tank 1 is connected, as in example 5, through the line 43 connected to line 19 through the check valve 47 and a solenoid valve 48 to the outlet 46 of the mixed fuel tank 16. On the additional line 43 there are successively: the check valve 44 and the pump 45. The remaining connections are the same as in example 5.

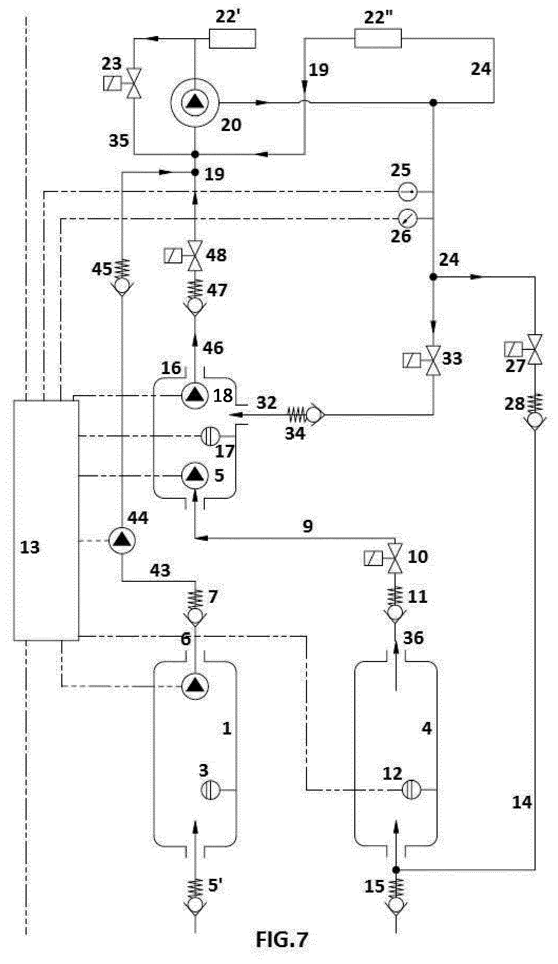

Example 7. According to the third variant illustrated in Fig. 7, the additional line 43 connected to the line 19 is connected to an inlet of twin chamber high pressure pump 20. The line 19 is connected to the second branch of the bypass 35 and the additional low pressure injector rail 22 " is connected in series with the output of the high pressure pump 20 on the line 19 and a further the line 24. In the second branch of the bypass 35 is plugged in the solenoid valve 23. The remaining connections are the same as in example 5.

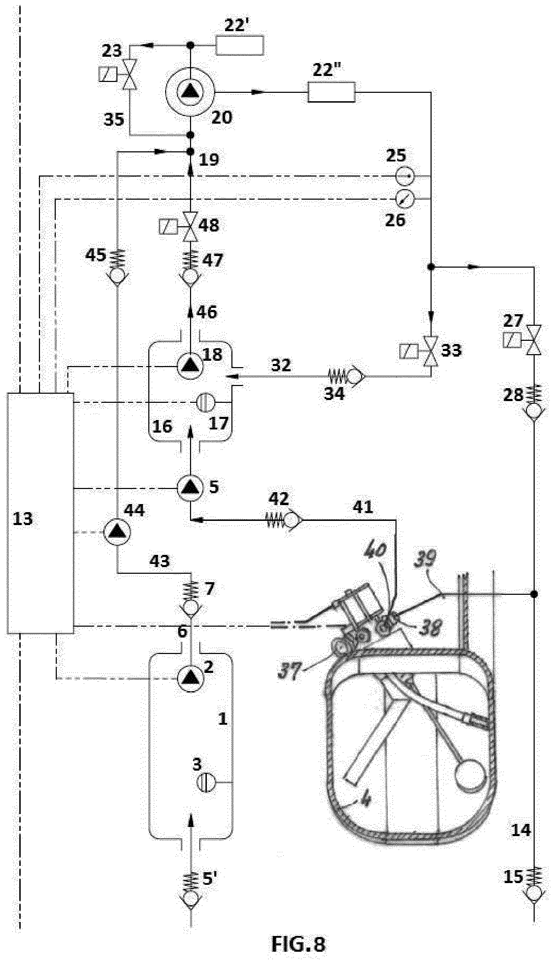

Example 8. As shown in Fig. 8, the additional line 43 - connected to the line 19 at the outlet from the mixed fuel tank 16 and also connected with the bypass branch 35 - is connected to the inlet of twin chamber high pressure pump 20 whose outlet is connected to the additional low pressure injection rail 22 " and further to the line 24. Furthermore there are shown the features of the alternative fuel tank in the form of gas: the multivalve 37, the output of gas service 38, a line 39 connecting the return circuit line 14, a refueling outlet 40, a line 41 connecting to the circulation pump 5 and a check valve 42 plugged in into the line 41. The remaining connections are the same as in example 5.

## Claims

1. Dual fuel system for powering combustion engines comprising:
a primary fuel tank (1) in a form of a gasoline or diesel with a primary fuel pump (2), an alternative fuel tank (4) in a form of gas, a mixed fuel tank (16), an alternative fuel circulation pump (5), a twin chamber high pressure pump (20), an injector rail (22'), a return circuit for returning excess fuel from the high pressure pump and valves and solenoid valves, and a controller (13) for controlling the operation of the system, wherein the mixed fuel tank (16) is equipped with a mixed fuel pump (18) and a mixed fuel level sensor (17), which is connected to the controller (13), the inlet of the twin chamber high pressure pump (20) is connected to the mixed fuel pump (18) with a line (19) and its high pressure output is connected to the injector rail (22'), the inlet of an alternative fuel circulation pump (5), located at the inlet of the mixed fuel tank (16) or in the mixed fuel tank (16), is connected through a first line (6) having a solenoid valve (8) and a check valve (7) to the outlet of the primary fuel tank (1) in the form of gasoline or diesel, and through a second line (9) having a solenoid valve (10) and a check valve (11) to the outlet of an alternative fuel tank (4) in the form of gas, wherein a line (29) of the return circuit connects the inlet of the mixed fuel tank (16) with the refueling line of the alternative fuel tank in the form of gas (4), **characterized in that,**
the return circuit extending from the second output of the twin chamber high pressure pump (20) comprises a return line (24) with a turned on pressure sensor (25) and a temperature sensor (26) which connects through a return line (32), having a solenoid (33) and a check valve (34), to the inlet to the mixed fuel tank (16) and connects through another return line (14), having a solenoid (27) and a check valve (28), to the inlet to the refueling line of the alternative fuel tank (4) in the form of gas.

2. Dual fuel system according to claim 1, **characterized in that,** the output of the twin chamber high pressure pump (20) is connected by a second branch of the bypass (35) through a solenoid valve (23) with the second output of the twin chamber high pressure pump (20), or between the output of the twin chamber high pressure pump (20) and an inlet of the output of the twin chamber high pressure pump (20) there is plugged in the branch of the bypass (35) with the solenoid valve (23).

3. Dual fuel system according to claim 1, **characterized in that,** the line (29) of the return circuit between the connection of refueling line of the alternative fuel tank in the form of gas (4) and inlet to the mixed fuel tank (16) has installed a check valve (30) and a solenoid valve (31).

4. Dual fuel system according to claim 1, **characterized in that,** the alternative fuel tank (4) in a form of gas comprises a multivalve (37), which of an output (40) is connected through a check valve (42) with inlet of the circulating pump (5), wherein an inlet (38) of the multivalve (37) is connected to a check valve (15) of refueling line of the alternative fuel in the form of gas.

5. Dual fuel system according to claim 4, **characterized in that,** the primary fuel pump (2), the circulation pump (5), the mixed fuel pump (18), alternative fuel in the form of gas level sensor (12), the mixed fuel level sensor (17), the pressure sensor (25), the temperature sensor (26) and the solenoid valves (8), (10), (23), (27), (31) and (33) and a multivalve solenoid (37) are connected the controller (13).

6. Dual fuel system for powering combustion engines comprising:
a primary fuel tank (1) in a form of a gasoline or diesel with a primary fuel pump (2), an alternative fuel tank (4) in a form of gas, a mixed fuel tank (16), an alternative fuel circulation pump (5), a twin chamber high pressure pump (20), an injector rail (22'), a return circuit for returning excess fuel from the high pressure pump and valves and solenoid valves, and a controller (13) for controlling the operation of the system, wherein the mixed fuel tank (16) is equipped with a mixed fuel pump (18) and a mixed fuel level sensor (17), which is connected to the controller (13), the inlet of the twin chamber high pressure pump (20) is connected to the mixed fuel pump (18) with a line (19) and its high pressure output is connected to the injector rail (22'), the inlet of an alternative fuel circulation pump (5), located at the inlet of the mixed fuel tank (16) or in the mixed fuel tank (16), is connected through a line (9) having a solenoid valve (10) and a check valve (11) to the out of an alternative fuel tank (4) in the form of gas, wherein the outlet of the primary fuel tank (1) containing the line (6) with the check valve (7) is connected through the line (43) with the line (19) constituting the outlet of the mixed fuel tank (16) containing a line (46) with a check valve (47) and a solenoid (48), **characterized in that,**
the return circuit extending from the second output of the twin chamber high pressure pump (20) comprises a return line (24) with a turned on pressure sensor (25) and a temperature sensor (26) which connects through a return line (32), having a solenoid (33) and a check valve (34), to the inlet to the mixed fuel tank (16) and connects through another return line (14), having a solenoid (27) and a check valve (28), to the inlet to the refueling line of the alternative fuel tank (4) in the form of gas.

7. Dual fuel system according to claim 6, **characterized in that,** on the line (43) connecting the outlet of the primary tank (1) with the line (19) constituting the outlet of the mixed fuel tank (16), there is a pump (44) and a check valve (45).

8. Dual fuel system according to claim 6 or 7, **characterized in that,** it comprises the low pressure injector rail (22"), connected in series with the inlet of the high pressure pump (20).

9. Dual fuel system according to claim 6 or 7, **characterized in that,** it comprises the low pressure injector rail (22"), connected in series with the output of the high-pressure pump (20).

## Patentansprüche

1. Doppelkraftstoffanlage zur Versorgung von Brennstoffmotoren, bestehend aus den folgenden Komponenten:
Hauptkraftstoffbehälter (1) für Benzin oder Dieselkraftstoff, mit Hauptkraftstoffpumpe (2), Alternativkraftstoffbehälter (4) für Gas, Mischkraftstoffbehälter (16), Alternativkraftstoffumwälzpumpe (5), Doppelkammerhochdruckpumpe (20), Einspritzliste (22'), Rücklaufkreis für Überschusskraftstoff von Hochdruckpumpe, Ventilen und Magnetventilen sowie Steuergerät (13) zur Steuerung des Anlagenbetriebs, wobei der Mischkraftstoffbehälter (16) mit einer Mischkraftstoffpumpe (18) und einem Mischkraftstofffüllstandssensor (17) ausgerüstet ist, der mit dem Steuergerät (13) verbunden ist und der Einlass der Doppelkammerhochdruckpumpe (20) mit der Mischkraftstoffpumpe (18) über eine Leitung (19) verbunden ist und der Hochdruckauslass mit der Einspritzleiste (22') verbunden ist, wobei der Einlass der Alternativkraftstoffumwälzpumpe (5) am Einlass des Mischkraftstoffbehälters (16) oder im Mischkraftstoffbehälter (16) installiert und über die erste Leitung (6) mit Magnetventil (8) und Rückschlagventil (7) mit dem Auslass des Hauptkraftstoffbehälters (1) für Benzin oder Dieselkraftstoff und über die zweite Leitung (9) mit Magnetventil (10) und Rückschlagventil (11) mit dem Auslass des Alternativkraftstoffbehälter (4) für Gas verbunden ist, wobei die Leitung (29) des Rücklaufkreises den Einlauf des Mischkraftstoffbehälters (16) mit der Nachfüllleitung des Alternativkraftstoffbehälter für Gas (4) verbinden, **dadurch gekennzeichnet, dass**
der Rücklaufkreis ausgehend vom, zweiten Auslass der Doppelkammerhochdruckpumpe (20) aus einer Rücklaufleitung (24) mit einem Drucksensor (25) und einem Temperatursensor (26) besteht, der über die Rücklaufleitung (32) mit Magnetventil (33) und Rückschlagventil (34) mit dem Einlass des Mischkraftstoffbehälter (16) und über eine weitere Rücklaufleitung (14) mit Magnetventil (27) und Rückschlagventil (28) mit dem Einlass der Alternativkraftstoffnachfüllleitung (4) für Gas verbunden ist.

2. Doppelkraftstoffsystem nach Anspruch 1, **dadurch gekennzeichnet, dass** der Auslauf der Doppelkammerhochdruckpumpe (20) über den zweiten Abzweig der Umgehung (35) über das Magnetventil (23) mit dem zweiten Auslass der Doppelkammerhochdruckpumpe (20) verbunden ist oder zwischen dem Auslass der Doppelkammerhochdruckpumpe (20) und dem Einlass des Ausgangs der Doppelkammerhochdruckpumpe (20) der Abzweig der Umgehung (35) mit dem Magnetventil (23) zwischengeschaltet ist.

3. Doppelkraftstoffsystem nach Anspruch 1, **dadurch gekennzeichnet, dass** die Leitung (29) des Primärkreises zwischen der Verbindung der Alternativkraftstoffnachfüllleitung für Gas (4) und dem Einlass des Mischkraftstoffbehälters (16) sich das Rückschlagventil (30) und das Magnetventil (31) befinden.

4. Doppelkraftstoffsystem nach Anspruch 1, **dadurch gekennzeichnet, dass** der Alternativkraftstoffbehälter (4) für Gas aus einem Multiventil (37) besteht, dessen Auslass (40) über das Rückschlagventil (42) mit dem Einlass der Umwälzpumpe (5) verbunden ist, wobei der Einlass (38) des Multiventils (37) mit dem Rückschlagventil (15) der Alternativkraftstoffnachfüllleitung für Gas verbunden ist.

5. Doppelkraftstoffsystem nach Anspruch 4, **dadurch gekennzeichnet, dass** die Hauptkraftstoffpumpe (2), Umwälzpumpe (5), Mischkraftstoffpumpe (18), der Füllstandssensor (12), Drucksensor (25), Temperatursensor (26) und die Magnetventile (8), (10), (23), (27) (31) und (33) sowie das Alternativkraftstoffmultimagnetventil für Gas mit dem Steuergerät (13) verbunden sind.

6. Doppelkraftstoffanlage zur Versorgung von Brennstoffmotoren, bestehend aus den folgenden Komponenten:
Hauptkraftstoffbehälter (1) für Benzin oder Dieselkraftstoff, mit Hauptkraftstoffpumpe (2), Alternativkraftstoffbehälter (4) für Gas, Mischkraftstoffbehälter (16), Alternativkraftstoffumwälzpumpe (5), Doppelkammerhochdruckpumpe (20), Einspritzliste (22'), Rücklaufkreis für Überschusskraftstoff von Hochdruckpumpe, Ventilen und Magnetventilen sowie Steuergerät (13) zur Steuerung des Anlagenbetriebs, wobei der Mischkraftstoffbehälter (16) mit einer Mischkraftstoffpumpe (18) und einem Mischkraftstofffüllstandssensor (17) ausgerüstet ist, der mit dem Steuergerät (13) verbunden ist und der Einlass der Doppelkammerhochdruckpumpe (20) mit der Mischkraftstoffpumpe (18) über eine Leitung (19) verbunden ist und der Hochdruckauslass mit der Einspritzleiste (22') verbunden ist, wobei der Einlass der Alternativkraftstoffwälzpumpe (5) am Einlass des Mischkraftstoffbehälters (16) oder im Mischkraftstoffbehälter (16) installiert und über die erste Leitung (9) mit Magnetventil (10) und Rückschlagventil (11) mit dem Auslass des Alternativkraftstoffbehälters (4) für Gas verbunden ist, wobei der Auslass des Hauptkraftstoffbehälters (1) über eine Leitung (19) verfügt, die als Auslass des Mischkraftstoffbehälters (16) mit der Leitung (46) und Rückschlagventil (47) und Magnetventil (48) funkgiert, **dadurch gekennzeichnet, dass**
der Rücklaufkreis ausgehend vom, zweiten Auslass der Doppelkammerhochdruckpumpe (20) aus einer Rücklaufleitung (24) mit einem Drucksensor (25) und einem Temperatursensor (26) besteht, der über die Rücklaufleitung (32) mit Magnetventil (33) und Rückschlagventil (34) mit dem Einlass des Mischkraftstoffbehälter (16) und über eine weitere Rücklaufleitung (14) mit Magnetventil (27) und Rückschlagventil (28) mit dem Einlass der Alternativkraftstoffnachfüllleitung (4) für Gas verbunden ist.

7. Doppelkraftstoffanlage nach Anspruch 6, **dadurch gekennzeichnet, dass** an der Leitung (43) die Pumpe (44) und das Rückschlagventil (45) angebracht sind.

8. Doppelkraftstoffanlage nach Anspruch 6 oder 7, **dadurch gekennzeichnet, dass** die Niederdruckeinspritzleiste (22") mit dem Einlass der Hochdruckpumpe (20) in Reihe verbunden ist.

9. Doppelkraftstoffanlage nach Anspruch 6 oder 7, **dadurch gekennzeichnet, dass** die Niederdruckeinspritzleiste (22") mit dem Auslass der Hochdruckpumpe (20) verbunden ist.

## Revendications

1. Système à deux carburants pour alimenter des moteurs à combustion comprenant :
un réservoir à carburant primaire (1) sous forme d'essence ou de diesel avec une pompe à carburant primaire (2), un réservoir à carburant alternatif (4) sous forme de gaz, un réservoir à carburant mélange (16), une pompe de circulation de carburant alternative (5), une pompe haute pression à deux chambres (20), une rampe d'injection (22'), un circuit de retour destiné à reconduire le carburant en excès provenant de la pompe haute pression et de vannes, ainsi que des électrovannes et un contrôleur (13) pour contrôler le fonctionnement du système, dans lequel le réservoir à carburant mélange (16) est équipé d'une pompe à carburant mélange (18) et d'un capteur de niveau de carburant mélange (17), qui est relié au contrôleur (13), l'entrée de la pompe haute pression à deux chambres (20) est connectée à la pompe à carburant mélange (18) par une conduite (19) et sa sortie haute pression est connectée à la rampe d'injection (22'), l'entrée de la pompe de circulation de carburant alternative (5), située à l'entrée du réservoir à carburant mélange (16) ou dans le réservoir à carburant mélange (16), est connectée par une première conduite (6) comportant une électrovanne (8) et un clapet anti-retour (7) à la sortie du réservoir à carburant primaire (1) sous forme d'essence ou de diesel et par une seconde conduite (9) comportant une électrovanne (10) et un clapet anti-retour (11) jusqu'à la sortie d'un réservoir de carburant alternatif (4) sous forme de gaz, dans lequel une conduite (29) du circuit de retour relie l'entrée du réservoir à carburant mélange (16) à la conduite de ravitaillement en carburant du réservoir à carburant alternatif sous forme de gaz (4), **caractérisé en ce que**
le circuit de retour s'étendant depuis la seconde sortie de la pompe haute pression à deux chambres (20) comprend une conduite de retour (24) avec un capteur de pression allumé (25) et un capteur de température (26) qui se connecte par une conduite de retour (32), comportant une électrovanne (33) et un clapet anti-retour (34), à l'entrée du réservoir à carburant mélange (16) et se connecte par une autre conduite de retour (14), comportant une électrovanne (27) et un clapet anti-retour (28), à l'entrée de la conduite de ravitaillement en carburant du réservoir à carburant alternatif (4).

2. Système à deux carburants selon la revendication 1, **caractérisé en ce que** la sortie de la pompe haute pression à deux chambres (20) est connectée par une seconde branche de la dérivation (35) à travers une électrovanne (23) avec la seconde sortie de la pompe haute pression à deux chambres (20), ou entre la sortie de la pompe haute pression à deux chambres (20) et une entrée de la sortie de la pompe haute pression à deux chambres (20), où elle est branchée dans la branche de la dérivation (35) avec l'électrovanne (23).

3. Système à deux carburants selon la revendication 1, **caractérisé en ce que** la conduite (29) du circuit de retour entre la connexion de la conduite de ravitaillement en carburant du réservoir à carburant alternatif sous forme de gaz (4) et l'entrée du réservoir à carburant mélange (16) a un clapet anti-retour (30) et une électrovanne (31) installés.

4. Système à deux carburants selon la revendication 1, **caractérisé en ce que** le réservoir à carburant alternatif sous forme de gaz (4) comprend un bloc multivannes (37) relié à une sortie (40) par un clapet anti-retour (42) avec entrée de la pompe de circulation (5), dans laquelle une entrée (38) du bloc multivannes (37) est reliée à un clapet anti-retour (15) de la conduite de ravitaillement en carburant alternatif sous forme de gaz.

5. Système à deux carburants selon la revendication 4, **caractérisé en ce que** la pompe à carburant primaire (2), la pompe de circulation (5), la pompe à carburant mélange (18), le carburant alternatif sous la forme d'un capteur de niveau de gaz (12), le capteur de pression (25), le capteur de température (26) et les électrovannes (8), (10), (23), (27), (31) et (33) et une électrovanne à bloc multivannes (37) sont connectés au contrôleur (13).

6. Système à deux carburants pour alimenter des moteurs à combustion comprenant :
un réservoir de carburant primaire (1) sous forme d'essence ou de diesel avec une pompe à carburant primaire (2), un réservoir de carburant alternatif (4) sous forme de gaz, un réservoir de carburant mélange (16), une pompe de circulation de carburant alternatif (5), une pompe haute pression à deux chambres (20), une rampe d'injection (22'), un circuit de retour destiné à reconduire le carburant en excès provenant de la pompe haute pression et de vannes, ainsi que des électrovannes et un contrôleur (13) pour contrôler le fonctionnement du système, dans lequel le réservoir de carburant mélange (16) est équipé d'une pompe à carburant mélange (18) et d'un capteur de niveau de carburant mélange (17), qui est relié au contrôleur (13), l'entrée de la pompe haute pression à deux chambres (20) est reliée à la pompe à carburant mélange (18) par une conduite (19) et sa sortie haute pression est connectée à la rampe d'injection (22'), l'entrée de la pompe de circulation de carburant alternatif (5), située à l'entrée du réservoir de carburant mélange (16) ou dans le réservoir de carburant mélange (16), est reliée par une conduite (9) comportant une électrovanne (10) et un clapet anti-retour (11) à la sortie d'un réservoir à carburant alternatif (4) sous forme de gaz, dans lequel la sortie du réservoir à carburant primaire (1) contenant la conduite (6) avec le clapet anti-retour (7) est reliée par la conduite (43) à la conduite (19) constituant la sortie du réservoir de carburant mélange (16) contenant une conduite (46) avec un clapet anti-retour (47) et une électrovanne (48), **caractérisé en ce que**
le circuit de retour s'étendant depuis la seconde sortie de la pompe haute pression à deux chambres (20) comprend une conduite de retour (24) avec un capteur de pression allumé (25) et un capteur de température (26) qui se connecte par une conduite de retour (32), comportant une électrovanne (33) et un clapet anti-retour (34), à l'entrée du réservoir à carburant mélange (16) et se connecte par une autre conduite de retour (14), comportant une électrovanne (27) et un clapet anti-retour (28), à l'entrée de la conduite de ravitaillement en carburant du réservoir à carburant alternatif (4).

7. Système à double carburant selon la revendication 6, **caractérisé en ce que** sur la conduite (43) se trouvent une pompe (44) et un clapet anti-retour (45).

8. Système à double carburant selon la revendication 6 ou 7, **caractérisé en ce que** la rampe d'injection basse pression (22"), est connectée en série à l'entrée de la pompe haute pression (20).

9. Système à double carburant selon la revendication 6 ou 7, **caractérisé en ce que** la rampe d'injection basse pression (22"), est connectée en série à la sortie de la pompe haute pression (20).
